**Europäisches Patentamt**

**European Patent Office**

**Office européen des brevets**

(19)

(11) Numéro de publication: **0 204 622**
**B1**

(12) ## FASCICULE DE BREVET EUROPEEN

(45) Date de publication du fascicule du brevet:
07.12.88

(51) Int. Cl.⁴: **B 29 C 47/40,** B 29 C 47/50,
B 29 C 47/08

(21) Numéro de dépôt: **86401148.1**

(22) Date de dépôt: **29.05.86**

(54) Machine d'extrusion comportant deux fourreaux superposés.

(30) Priorité: 05.06.85 FR 8508489

(43) Date de publication de la demande:
10.12.86 Bulletin 86/50

(45) Mention de la délivrance du brevet:
07.12.88 Bulletin 88/49

(84) Etats contractants désignés:
AT CH DE GB IT LI

(56) Documents cités:
DE-A- 2 301 064
FR-A- 2 186 334
GB-A- 1 167 850
US-A- 3 442 065
US-A- 3 442 866
US-A- 3 702 691
US-A- 4 092 089

(73) Titulaire: Mc NEIL AKRON REPIQUET, 7, Boulevard de la
Madeleine, F-75001 Paris (FR)

(72) Inventeur: Ovtcharenko, Jean, 13, rue Henri Brochard,
F-95580 Margency (FR)
Inventeur: Velluire, Maurice, 96, rue des Chesnaux,
F-95160 Montmorency (FR)

(74) Mandataire: Netter, André et al, Cabinet NETTER 40, rue
Vignon, F-75009 Paris (FR)

ACTORUM AG

## Description

L'invention concerne une machine d'éxtrusion pour matières pouvant être filées en continu, à chaud ou à froid, telles que les matières thermoplastiques, caoutchouteuses ou autres, qui se présentent initalement sous forme visqueuse, pulvérulente, en grains, etc.

On connaît un assez grand nombre de types différents de machines d'extrusion, comprenant un seul fourreau cylindrique logeant une seule vis entraînée en rotation autour de son axe à l'intérieur du fourreau, ou bien deux fourreaux à une seule vis reliés bout à bout, ou encore un fourreau contenant deux vis parallèles et imbriquées l'une dans l'autre, qui sont entraînées en rotation à la même vitesse et en sens contraire à l'intérieur du fourreau, ou encore un fourreau à deux vis parallèles relié à un autre fourreau contenant une seule vis.

Ce dernier type de machine d'extrusion est actuellement préféré, en raison des nombreux avantages qu'il présente par rapport aux autres types de machines et qui sont bien connus des spécialistes.

Toutefois, dans la technique actuelle, la disposition de deux vis parallèles dont les filets sont imbriqués les uns dans les autres à l'intérieur d'un même fourreau cylindrique pose encore des problèmes techniques qui ont été résolus, jusqu'à présent, par exemple en entraînant chaque vis au moyen d'un groupe motoréducteur qui lui est propre, le groupe motoréducteur d'entraînement d'une vis étant placé à une extrémité du fourreau contenant les deux vis, tandis que le groupe motoréducteur d'entraînement de l'autre vis est placé à l'autre extrémité de ce fourreau. Chaque vis prend appui sur un palier de butée axiale à l'une de ses extrémités et ces paliers de butée axiale qui ont été jusqu'à présent largement surdimensionnés, doivent être placés à des extrémités opposées du fourreau pour des raisons d'encombrement.

Il en résulte des difficultés de démontage de ces vis pour leur nettoyage, ce démontage entraînant nécessairement le démontage d'au moins un groupe motoréducteur d'entraînement.

Par ailleurs, comme les vis et le fourreau sont en général à des températures très différentes lors du fonctionnement normal de la machine, les vis étant par exemple à une température de l'ordre de 100 à 120°C tandis que le fourreau peut atteindre une température de 200°C, il est nécessaire d'utiliser des moyens très complexes pour compenser les différences d'allongement par dilatation thermique entre les vis et le fourreau.

Lorsque la machine d'extrusion comprend, comme indiqué plus haut, un premier fourreau contenant une ou deux vis, raccordé à un second fourreau contenant une vis, il a été jusqu'à présent nécessaire de disposer ces deux fourreaux perpendiculairement l'un à l'autre, pour réduire la longueur du canal de transfert de matière entre ces deux fourreaux, l'encombrement des motoréducteurs d'entraînement aux extrémités du fourreau interdisant de les juxtaposer dans un même plan vertical. Il en résulte que l'encombrement au sol d'une machine de ce type est très important.

On connaît également, d'après le document DE-A-2 301 604, une machine d'extrusion du type mentionné dans le préambule de la revendication 1, machine dans laquelle les moyens motoréducteurs d'entraînement des deux vis du premier fourreau sont montés sur une même extrémité de ce fourreau.

Dans cette machine connue, les deux vis du premier fourreau prennent appui sur des butées axiales placées respectivement à des extrémités opposées de ce fourreau, ce qui oblige à démonter les deux butées axiales pour le nettoyage des vis.

De plus les deux fourreaux, de cette machine connue sont disposés perpendiculairement, ce qui entraîne aussi un encombrement au sol très important.

La présente invention a pour objet une machine d'extrusion du type précité, qui ne présente aucun des inconvénients des machines correspondantes de la technique antérieure.

Elle propose à cet effet une machine d'extrusion comprenant un premier fourreau cylindrique horizontal contenant deux vis parallèles entraînées en sens inverse à la même vitesse de rotation par des moyens motoréducteurs montés sur une même extrémité de ce premier fourreau, des moyens d'alimentation du premier fourreau en matière première, un second fourreau horizontal relié au premier par un canal de transfert de matière et contenant une seule vis entraînée en ce que des butées axiales des deux vis du premier fourreau sont montées à l'autre extrémité de ce premier fourreau, en ce que le premier fourreau est monté en porte-à-faux par une extrémité sur les moyens motoréducteurs d'entraînement des deux vis qu'il contient et en ce que les deux fourreaux sont parallèles et verticalement superposés.

Ainsi, pour avoir accès aux vis logées dans le premier fourreau, il suffit de démonter les butées axiales fixées à ladite autre extrémité du fourreau, et il n'est pas nécessaire de démonter les moyens motoréducteurs d'entraînement de ces vis.

Le montage en porte-à-faux du premier fourreau, qui permet la dilatation thermique du fourreau, est rendu possible par le fait que les moyens motorécuteurs d'entraînement sont montés à une même extrémité du fourreau et que l'autre extrémité de ce fourreau ne porte que les butées axiales des deux vis qu'il contient.

Etant donné que les deux fourreaux précités sont parallèles et verticalement superposés, on réduit ainsi l'encombrement au sol de la machine d'extrusion.

Avantageusement, les butées axiales des vis du premier fourreau sont logées dans un chapeau fixé de façon amovible à l'extrémité du premier fourreau.

Selon une autre caractéristique de l'invention, les extrémités des deux vis du premier fourreau, qui sont opposées auxdites butées axiales, sont montées libres en translation axiale par rapport à leurs moyens motoréducteurs d'entraînement.

Cette disposition permet de s'affranchir, sans autre moyens, des différences de dilatation thermique longitudinale entre le fourreau et les deux vis qu'il contient. En effet, la différence d'allongement par dilatation thermique entre le fourreau et les vis est rattrapée par le coulissement axial des vis dans les pignons de leurs moyens motoréducteurs d'entraînement, les vis restant cependant solidaires en rotation de ces pignons.

Corollairement, commes les vis du premier fourreau sont reliées à leurs moyens motoréducteurs d'entraînement à une même extrémité du fourreau et sont en appui sur les butées axiales à l'autre extrémité du fourreau, il devient possible de faire circuler un fluide caloporteur, par exemple de l'huile, à l'intérieur des vis en reliant les canaux internes prévus à cet effet dans les vis à des moyens d'alimentation en fluide caloporteur, du côté de leurs extrémités associées aux butées axiales, de sorte que le fluide caloporteur peut circuler dans le même sens dans les deux vis parallèles, qui sont ainsi maintenues toutes les deux à la même température en tout point de leur longueur.

Comme les deux fourreaux sont parallèles et superposés, le canal de transfert de matière entre les deux fourreaux est un conduit vertical d'une certaine longueur, qui est avantageusement muni de moyens de dégazage de la matière.

On peut profiter de la longueur de ce conduit vertical de transfert pour l'équiper de moyens propres à acheminer la matière vers le second fourreau, ces moyens étant par exemple du type à galets, à cames, ou à vis, formant pompe ou accélérateur.

En outre, ce conduit vertical peut être équipé de moyens d'accès à son volume interne, tels qu'une trappe de visite, ce qui permet le contrôle physique de l'état de la matière à l'intérieur de ce canal de transfert.

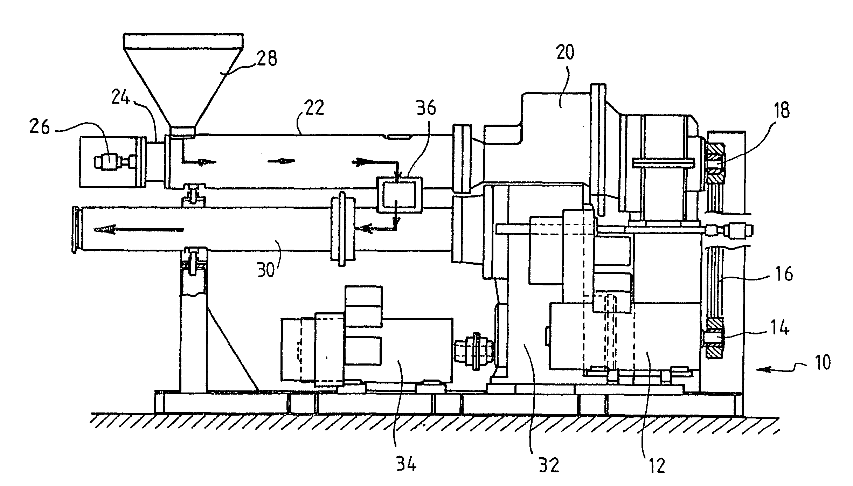

Dans la description qui suit, faite à titre d'exemple, on se réfère au dessin schématique annexé, qui est une vue en élévation latérale d'une machine d'extrusion selon l'invention.

Cette machine comprend un bâti 10 supportant un moteur électrique 12 à vitesse variable, dont l'arbre de sortie 14 est relié par des moyens de transmission 16 à l'arbre d'entrée 18 d'un groupe réducteur-inverseur 20 également supporté par le bâti 10 et à une extrémité duquel est monté un premier fourreau cylindrique 22 horizontal dans lequel sont logées, de façon classique, deux vis horizontales parallèles dont les filets sont imbriqués l'un dans l'autre et qui s'étendent sur toute la longueur du fourreau 22.

A son extrémité opposée au groupe réducteur 20, le fourreau 22 comprend un chapeau 24 contenant les butées axiales des deux vis parallèles logées dans ce fourreau 22.

Comme indiqué plus haut, les vis sont en général formées avec des canaux internes de circulation d'un fluide caloporteur, qui sont reliés, à leurs extrémités situées du côté des butées axiales, à des moyens d'alimentation et d'évacuation de ce fluide, qui sont désignés généralement par la référence 26.

Au voisinage de son extrémité opposée au groupe réducteur 20, le fourreau 22 est également équipé d'une trémie 28 d'alimentation en matière première.

De façon classique, le groupe réducteur 20 permet d'entraîner les deux vis logées dans le fourreau 22 à la même vitesse de rotation, mais en sens contraire, pour l'acheminement de la matière dans le sens indiqué par les flèches à l'intérieur de ce fourreau.

Les extrémités des deux vis logées dans ce fourreau 22, qui coopèrent avec les pignons du groupe réducteur 20, sont montées mobiles en translation axiale par rapport aux pignons de sortie du groupe réducteur 20.

La machine comprend un second fourreau cylindrique horizontal 30, contenant une seule vis entraînée en rotation par un groupe réducteur 32 lui-même entraîné par un moteur électrique 34 à vitesse variable, ce réducteur 32 et ce moteur 34 étant portés également par le châssis 10.

Comme on le voit sur le dessin, les deux fourreaux 22 et 30 ont sensiblement la même longueur et sont verticalement superposés, le second fourreau 30 étant relié à son groupe réducteur d'entraînement 32 du même côté que le premier fourreau 22. Un conduit vertical 36, formant canal de transfert de la matière, relie les deux fourreaux 22 et 30, au voisinage de leurs extrémités fixées sur les groupes réducteurs 20 et 32. Ce conduit vertical 36 a une certaine longueur, les deux fourreaux 22 et 30 ne pouvant être accolés en raison de l'encombrement de leurs groupes réducteurs respectifs 20 et 32.

La longueur de ce conduit vertical 36 est mise à profit pour l'équiper de moyens conventionnels d'acheminement de matière, si nécessaire, formant pompe ou accélérateur, et qui sont par exemple du type à galets, à cames, à vis ou analogues.

Ce conduit vertical 36 est également équipé de moyens de dégazage de la matière, permettant l'évacuation de différentes vapeurs de la matière, soit sous vide, soit par communication directe avec l'atmosphère extérieure.

Des moyens d'accès au volume intérieur de ce conduit vertical 36, tels qu'une porte de visite, peuvent être également prévus pour le contrôle physique de l'état de la matière.

On peut encore profiter de la longueur de ce conduit vertical 36 pour introduire certains adjuvants spéciaux dans la matière, qui ne pourraient être introduits directement dans la machine par la trémie 28, par exemple en raison de leur instabilité à la chaleur.

L'extrémité libre du second fourreau 30, opposée au groupe réducteur 32, est de façon classique munie d'une tête d'extrusion.

Cette machine fonctionne de la façon suivante:

La matière première est introduite dans la trémie 28 et de là dans l'extrémité gauche (sur le dessin) du premier fourreau 22. Elle est acheminée par les deux vis logées dans ce fourreau vers l'extrémité opposée du fourreau, jusqu'au niveau du conduit vertical de transfert 36. Dans le premier fourreau 22, la matière est essentiellement gélifiée et homogénéisée. Elle circule ensuite dans le canal de transfert 36, soit par gravité, soit sous l'action des moyens d'acheminement dont ce canal de transfert peut être équipé, elle pénètre dans le second fourreau 30 au voisinage de son extrémité reliée au groupe réducteur 32, puis est déplacée vers la tête d'extrusion par la vis logée dans ce second fourreau. La fonction de ce dernier est essentiellement de réguler le débit de matière et de stabiliser la température de celle-ci, ainsi que d'engendrer la pression nécessaire d'extrusion de la matière.

On comprend que cette machine présente un grand nombre d'avantages par rapport à la technique antérieure:

— comme les paliers de butée axiale des deux vis du premier fourreau 22 sont situés à l'extrémité libre de ce premier fourreau, il est facile de les démonter et de les dégager de cette extrémité du fourreau, ce qui permet le démontage des vis logées dans ce fourreau;

— la compensation de la différence de dilatation thermique longitudinale des vis et du fourreau est réalisée automatiquement, par coulissement axial des extrémités des vis dans les pignons du groupe réducteur 20;

— l'alimentation des vis en liquide caloporteur se fait par leurs extrémités reçues dans les paliers de butée axiale, de sorte que le fluide caloporteur circule dans le même sens dans les deux vis logées dans le premier fourreau 22;

— le fourreau 22 est monté en porte-à-faux par une extrémité sur le groupe réducteur 20, ce qui lui permet de se dilater longitudinalement en direction de son extrémité opposée comprenant les paliers de butée axiale des deux vis, en entraînant ainsi avec lui les deux vis qu'il contient et dont les extrémités opposée coulissent librement dans les pignons d'entraînement du groupe réducteur 20;

— la disposition parallèle à superposition verticale des deux fourreaux 22 et 30 réduit l'encombrement au sol de la machine;

— la longueur du canal vertical de transfert 36 permet de l'équiper des moyens nécessaires de dégazage de la matière, d'acheminement de la matière vers le second fourreau, d'introduction d'adjuvants spéciaux, et de contrôle de l'état de la matière.

## Revendications

1. Machine d'extrusion pour matières pouvant être filées en continu, comprenant un premier fourreau (22) cylindrique horizontal contenant deux vis parallèles entraînées en sens inverse à la même vitesse de rotation par des moyens motoréducteurs (12, 20) montés sur une même extrémité de ce premier fourreau (22), des moyens (28) d'alimentation du premier fourreau (22) en matière première, un second fourreau horizontal (30) relié au premier par un canal (36) de transfert de matière et contenant une seule vis entraînée en rotation par des moyens motoréducteurs (32, 34), caractérisée en ce que des butées axiales des deux vis du premier fourreau (22) sont montées à l'autre extrémité de ce premier fourreau (22), en ce que ce premier fourreau (22) est monté en porte-à-faux par une extrémité sur les moyens motoréducteurs d'entraînement (20) des deux vis qu'il contient et en ce que les deux fourreaux (22, 30) sont parallèles et verticalement superposés.

2. Machine selon la revendication 1, caractérisée en ce que lesdites butées axiales sont logées dans un chapeau (24) fixé de façon amovible à l'extrémité du premier fourreau (22).

3. Machine selon la revendication 1, caractérisée en ce que les extrémités des deux vis du premier fourreau (22), qui sont opposées auxdites butées axiales, sont montées libres en translation axiale par rapport à leurs moyens motoréducteurs d'entraînement (20).

4. Machine selon l'une des revendications précédentes, comprenant des moyens (26) d'alimentation des vis du premier fourreau (22) en fluide caloporteur, caractérisée en ce que ces moyens d'alimentation (26) sont reliés à des canaux internes de circulation du fluide prévus dans les vis, à l'extrémité de ces vis qui est opposée aux moyens motoréducteurs (20), de sorte que le fluide caloporteur circule dans le même sens dans les deux vis parallèles du premier fourreau (22).

5. Machine selon l'une des revendications précédentes, caractérisée en ce que le canal de transfert de matière entre les deux fourreaux (22, 30) est un conduit vertical (36) d'une certaine longueur, muni de moyens de dégazage de la matière.

6. Machine selon la revendication 5, caractérisée en ce que le conduit vertical (36) comprend des moyens d'acheminement de la matière vers le second fourreau (30), formant pompe ou accélérateur.

7. Machine selon la revendication 5 ou 6, caractérisée en ce que le conduit vertical (36) comprend des moyens d'accès à son volume interne, tels qu'une trappe de visite par exemple, pour le contrôle physique de l'état de la matière.

## Patentansprüche

1. Extruder für kontinuierlich extrudierbares Material, bestehend aus einem ersten horizontalen Zylinderkörper (22) mit zwei parallel liegenden Schnekken, die gegenläufig mit gleicher Drehzahl von ein und demselben Ende des ersten Zylinderkörpers (22) aus durch ein Motorgetriebeaggregat (12, 20) angetrieben werden, einer Einrichtung (28) zum Beschicken des ersten Zylinderkörpers (22) mit Ausgangsmaterial, einem zweiten horizontalen Zylinderkörper (30), der mit dem ersten durch einen Materialführungskanal (36) verbunden ist und eine einzelne Schnecke enthält, die durch ein Motorgetriebeaggregat (32, 34) in Drehung versetzt wird, dadurch gekennzeichnet, dass Axiallager des ersten Zylinderkörpers (22) am anderen Ende des ersten Zylinderkörpers (22) angeordnet sind, dass der erste Zylinderkörper (22) mit einem Ende freitragend an dem die in ihm befindlichen beiden Schnecken antreibenden Motorgetriebeaggregat (20) angebracht ist, und dass die beiden Zylinderkörper (22, 30) parallel zueinander verlaufen und vertikal übereinander liegen.

2. Extruder nach Anspruch 1, dadurch gekennzeichnet, dass die genannten Axiallager in einer Abdeckung (24) angeordnet sind, die am Ende des ersten Zylinderkörpers (22) abnehmbar befestigt ist.

3. Extruder nach Anspruch 1, dadurch gekennzeichnet, dass die Enden der beiden Schnecken des ersten Zylinderkörpers (22), die den genannten Axiallagern gegenüberliegen, axial frei beweglich gegenüber ihrem antreibenden Motorgetriebeaggregat (20) angebracht sind.

4. Extruder nach einem der vorhergehenden Ansprüche, mit einer Einrichtung (26) zum Speisen der Schnecken des ersten Zylinderkörpers (22) mit flüssigem Kühlmittel, dadurch gekennzeichnet, dass die Speiseeinrichtung (26) an in den Schnecken vorgesehene, innenliegende Fluidumlaufkanäle an dem Ende der Schnecken angeschlossen ist, das dem Motorgetriebeaggregat (20) gegenüberliegt, so dass das flüssige Kühlmittel in den beiden Parallelschnekken des ersten Zylinderkörpers (22) in gleicher Richtung umläuft.

5. Extruder nach einem der vorhergehenden Ansprüche, dadurch gekennzeichnet, dass der Materialführungskanal zwischen den beiden Zylinderkörpern (22, 30) als Vertikalkanal (36) von bestimmter Länge ausgebildet und mit einer Einrichtung zum Entgasen des Materials versehen ist.

6. Extruder nach Anspruch 5, dadurch gekennzeichnet, dass der Vertikalkanal (36) eine als Pumpe oder Beschleunigungsvorrichtung ausgebildete Einrichtung zum Fördern des Materials in Richtung auf den zweiten Zylinderkörper (30) enthält.

7. Extruder nach Anspruch 5 oder 6, dadurch gekennzeichnet, dass der Vertikalkanal (36) eine Schauklappe oder eine andere Einrichtung aufweist, die den Zugang zu dem Innenraum des Kanals ermöglicht, um den Zustand des Materials unmittelbar überprüfen zu können.

**Claims**

1. Extrusion machine for materials which are able to be drawn continuously, comprising a first horizontal cylindrical sleeve (22) containing two parallel screws entrained in inverse direction at the same speed of rotation by motoreducing means (12, 20) mounted on the same end of the first sleeve (22), means (28) to supply the first sleeve (22) with raw material, a second horizontal sleeve (30) connected to the first by a channel (36) for transfer of material and containing a single screw entrained in rotation by motoreducing means (32, 34), characterized in that axial stops of the two screws of the first sleeve (22) are mounted at the other end of the first sleeve (22), in that this first sleeve (22) is mounted in overhung arrangement by one end over entrainment motoreducing means (20) of the two screws which it contains and in that the two sleeves (22, 30) are parallel and vertically superposed.

2. Machine according to claim 1, characterized in that the said axial stops are housed in a cap (24) fixed in a detachable manner at the end of the first sleeve (22).

3. Machine according to claim 1, characterized in that the ends of the two screws of the first sleeve (22), which are opposed to the said axial stops, are mounted so as to be free in axial translation in relation to their entrainment motoreducing means (20).

4. Machine according to one of the preceding claims, comprising means (26) for the supply of the screws of the first sleeve (22) with heat-conveying fluid, characterized in that these supply means (26) are connected to internal channels for circulation of the fluid, provided in the screws, at the end of these screws which is opposed to the motoreducing means (20), such that the heat-conveying fluid circulates in the same direction in the two parallel screws of the first sleeve (22).

5. Machine according to one of the preceding claims, characterized in that the channel for transfer of material between the two sleeves (22, 30) is a vertical pipe (36) of a certain length, provided with means for degassing of the material.

6. Machine according to claim 5, characterized in that the vertical pipe (36) comprises means for conveying the material towards the second sleeve (30), forming a pump or accelerator.

7. Machine according to claim 5 or 6, characterized in that the vertical pipe (36) comprises means for access to its internal volume, such as an inspection flap, for example, for a physical check of the state of the material.